# EUROPÄISCHE PATENTANMELDUNG

(11) **EP 0 825 087 A2**
(43) Veröffentlichungstag der Anmeldung: **25.02.1998**
(21) Anmeldenummer: 97111097.8
(22) Anmeldetag: 03.07.1997
(51) Int. Cl.: B62B 3/14

(54) **Transportwagen**

(30) Priorität: 05.08.1996 DE 19631606
(71) Anmelder: Wanzl GmbH & Co. Entwicklungs-KG, D-89336 Leipheim (DE)
(72) Erfinder: Ertle, Karl, 89129 Langenau (DE)

(57) **Zusammenfassung**

Die Erfindung betrifft einen stapelbaren Transportwagen (1) mit einer zum Transportieren durch ein Förderband (5) bestimmten Einrichtung (6). Es ist vorgesehen, daß die Einrichtung (6) folgende Merkmale aufweist:
a) ein Auslöseelement (7);
b) ein auf einer horizontalen Achse (23) gelagertes, mit dem Förderband in Kontakt bringbares Mitnahmeelement (22);
c) eine auf das Mitnahmeelement (22) einwirkende Drehsperre (10);
d) die Drehsperre (10) ist um eine in Schieberichtung sich erstreckende horizontale Achse (11) verschwenkbar gelagert;
e) die Drehsperre (10) weist eine Auflaufschräge (16) auf;
f) vor der Auflaufschräge (16) ist ein um eine horizontale Achse (18) verschwenkbares Klappteil (20) vorgesehen;
g) das Auslöseelement (7) ist zur Veränderung der Lage der Drehsperre (10) und des Klappteiles (20) eines weiteren zu stapelnden Transportwagens (1) bestimmt.

## Beschreibung

Die Erfindung betrifft einen stapelbaren Transportwagen mit einer zum Transportieren durch ein Förderband bestimmten Einrichtung.

Es soll ein Stapel Transportwagen durch ein Förderband bewegbar sein. Der Sinn und Anwendungsbereich einer derartigen Anlage wird hier nicht naher genannt, doch besteht die der Erfindung zugrundeliegende Aufgabe darin, an einem Transportwagen der hier vorliegenden Art eine Einrichtung vorzusehen, die ein zeitlich versetztes Fördern einzelner Transportwagen zu einer Entnahmestelle ermöglicht.

Zur Lösung der Aufgabe wird eine Einrichtung vorgeschlagen, die folgende Merkmale aufweist:
a) ein Auslöseelement;
b) ein auf einer horizontalen Achse gelagertes, mit dem Förderband in Kontakt bringbares Mitnahmeelement;
c) eine aufdas Mitnahmeelement einwirkende Drehsperre;
d) die Drehsperre ist um eine in Schieberichtung sich erstreckende horizontale Achse verschwenkbar gelagert;
e) die Drehsperre weist eine Auflaufschräge auf;
f) vor der Auflaufschräge ist ein um eine horizontale Achse verschwenkbares Klappteil vorgesehen;
g) das Auslöseelement ist zur Veränderung der Lage der Drehsperre und des Klappteiles eines weiteren zu stapelnden Transportwagens bestimmt.

Anhand eines Ausführungsbeispieles wird die Erfindung näher erläutert. Es zeigt
- Fig. 1: eine Reihe stapelbarer Transportwagen deren Einrichtung in Kontakt mit dem Förderband steht;
- Fig. 2 bis Fig. 5: wesentliche Bauteile der Einrichtung sowie
- Fig. 6: die Einrichtung in einer Draufsicht.

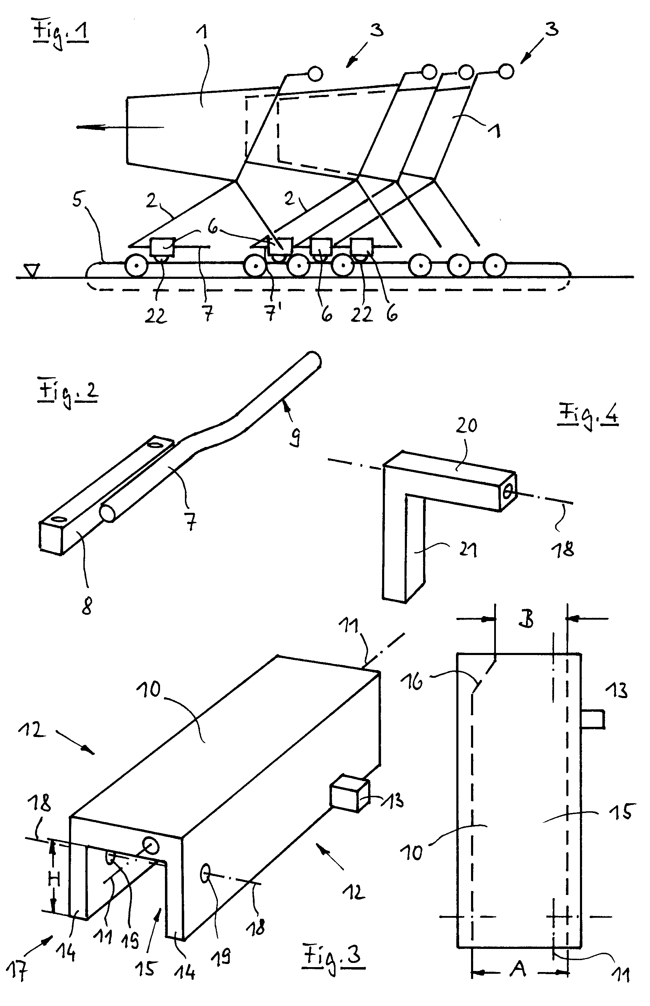

Fig. 1 zeigt eine Reihe ineinandergeschobener, stapelbarer Transportwagen 1. Im Beispiel sind die Transportwagen 1 als ineinanderschiebbare Einkaufswagen dargestellt. Die Transportwagen 1 können auch andere bekannte Ausführungsformen aufweisen, z.B. solche als Plattformwagen oder Kofferkulis. Die Transportwagen 1 weisen im unteren Bereich ihres Fahrgestelles 2 eine Einrichtung 6 auf, die über ein Mitnahmeelement 22 in ständigem Kontakt mit einem Förderband 5 steht, das die Transportwagen 1 in eine Richtung weiterbefördern soll. Die Einrichtungen 6 der Transportwagen 1 stehen in gestapeltem Zustand der Transportwagen 1 mit Hilfe von Auslöseelementen 7,7' in ständigem lösbaren Kontakt miteinander. Der in der Zeichnung dargestellte Pfeil verdeutlicht, daß der vorderste der Transportwagen 1 durch das Förderband 5 weiterbefördert werden soll. Um zu erklären, wie dies zu erfolgen hat, ist es notwendig die nachfolgend dargestellten wichtigsten Einzelteile der Einrichtung 6 zu beschreiben.

Fig. 2 zeigt das Auslöseelement 7 der Einrichtung 6. Es weist einen Befestigungsabschnitt 8 und einen dornförmigen Vorsprung 9 auf. Der Vorsprung 9 erstreckt sich parallel zur Schieberichtung des Transportwagens 1 in horizontaler Richtung zur Rückseite 3, vgl. Fig. 1, des Transportwagens 1.

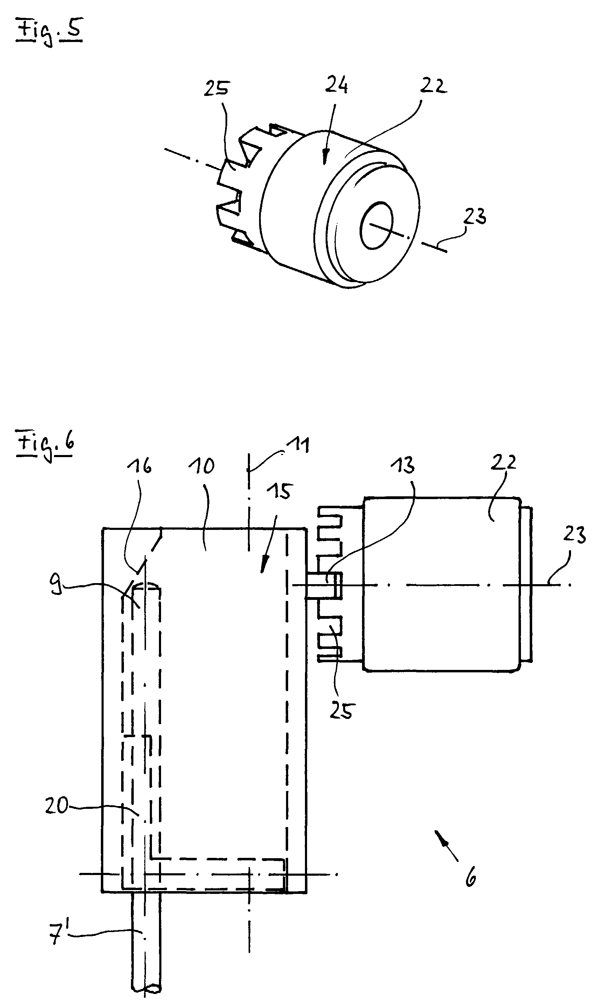

Fig. 3 zeigt eine Drehsperre 10, die der Einrichtung 6 angehört. Die Drehsperre 10 ist ebenfalls in Schieberichtung des Transportwagens 1 sich erstreckend am Fahrgestell 2 befestigt. Die Drehsperre 10 ist um eine horizontale Achse 11, die parallel zur Schieberichtung des Transportwagens 1 verläuft, begrenzt verschwenkbar am Fahrgestell 2 gelagert. An einer der beiden Längsseiten 12 weist die Drehsperre 10 einen Vorsprung 13 auf, der zum Eingriff in eine Verzahnung 25 bestimmt ist, die sich an dem in Fig. 5 gezeigten Mitnahmeelement 22 befindet. An ihrem vorderen Bereich 17, der als U-förmiges Teil gestalteten Drehsperre 10 sind auf einer horizontalen Achse 18 befindliche und quer zur Schieberichtung des Transportwagens 1 sich erstreckende Durchgangsbohrungen 19 angeordnet, die zur Aufnahme eines Achsteiles bestimmt sind. Die Schenkel 14 der Drehsperre 10 weisen nach unten und bilden so einen Durchgang 15, der zur Aufnahme des Auslöseelementes 7' eines weiteren Transportwagens 1 vorgesehen ist. An dem vom Vorsprung 13 weiter entfernten Schenkel 14 und in einem Abstand zur horizontalen Achse 11 ist eine Auflaufschräge 16 vorgesehen, die den Durchgang 15 in seiner gesamten Höhe H verengt. Dies wird durch die Maße A größer B verdeutlicht. B wiederum ist größer als die Dicke oder der Durchmesser des Vorsprunges 9 des Auslöseelementes 7.

Fig. 4 zeigt ein um die horizontale Achse 18 verschwenkbares Klappteil 20, das zum Einbau in die Drehsperre 10 bestimmt ist. Das auf einem Achsteil gelagerte Klappteil 20 weist einen nach unten gerichteten Anschlag 21 auf.

In Fig. 5 ist das Mitnahmeelement 22 näher dargestellt. Es ist als Rolle oder Walze ausgebildet und auf einer quer zur Schieberichtung des Transportwagens 1 sich erstreckenden horizontalen Achse 23 drehbar am Fahrgestell 2 gelagert. Das Mitnahmeelement 22 hat eine aus zähem und abriebfestem Material bestehende zylindrische Lauffläche 24, die zum ständigen Kontakt mit dem Förderband 5 bestimmt ist. An einer Seite des Mitnahmeelementes 22 ist eine koaxial zur Achse 23 angeordnete ringförmige Verzahnung 25 vorgesehen, die zur Aufnahme des Vorsprunges 13 der Drehsperre 10 bestimmt ist.

In einer Draufsicht und schematisch dargestellt zeigt Fig. 6 die Einrichtung 6. Auf die Darstellung der Art der Befestigung der Drehsperre 10, des Mitnahmeelementes 22 und des Auslöseelementes 7 am Fahrgestell 2 ist aus Gründen einer einfacheren Darstellung verzichtet worden. Die Drehsperre 10 nimmt jene Lage ein, in welcher der Vorsprung 13 der Drehsperre 10 in Eingriff mit der Verzahnung 25 des Mitnahmeelementes 22 steht. Dieser Zustand stellt sich automatisch dann ein, wenn der Transportwagen 1 dem Förderband 5 entnommen ist. Dann läßt sich das Mitnahmeelement 22 nicht drehen. Schiebt man den Transportwagen 1 auf das Förderband 5 (in Fig. 1 von rechts nach links) erfaßt das laufende Förderband 5 das nicht drehbare Mitnahmeelement 22 und fördert somit den eingeschobenen Transportwagen 1 zur Reihe 4 der Transportwagen 1. Da nun der Vorsprung 9 des Auslöseelementes 7 der Transportwagen 1 immer zu deren Rückseite gerichtet ist, taucht der Vorsprung 9 des vorausbefindlichen Transportwagens 1 in den Durchgang 15 der Drehsperre 10 des jeweils hinteren Transportwagens 1 ein. So auch der Vorsprung 9 des vorletzten Transportwagens 1 in die Drehsperre 10 des zuletzt auf das Förderband 5 geschobenen Transportwagens 1. Dieser Moment ist in Fig. 6 dargestellt. Man erkennt strichpunktiert gezeichnet den Vorsprung 9 des vorausbefindlichen Transportwagens 1, der gerade an der Auflaufschräge 16 der Drehsperre 10 des zuletzt eingeschobenen oder vom Förderband 5 eingezogenen Transportwagens 1 anstößt. Da sich das Förderband 5 bewegt, wird die Drehsperre 10 des letzten Transportwagens 1 weiter gegen den Vorsprung 9 des vorausbefindlichen Transportwagens 1 bewegt, mit der Folge, daß der Vorsprung 9 an der Auflaufschräge 16 weiter wandert und die Drehsperre 10 um die Achse 11 in der Zeichnung nach links auslenkt. Diese Auslenkung ist so groß, daß der Vorsprung 13 die Verzahnung 25 des Mitnahmeelementes 22 verläßt und dieses sich, vom Förderband 5 nun angetriebenen, leer durchdreht. Bei diesem Vorgang ist das zuvor vom Auslöseelement 7' angehobene Klappteil 20, bedingt durch die Auslenkung der Drehsperre 10, wieder nach unten in seine Ausgangslage gefallen. Es bildet nun zusammen mit der beabstandeten Auflaufschräge 16 einen gemeinsamen Anschlag für das Auslöseelement 7'. Die in Fig. 1 dargestellte, aus einem Förderband 5 und aus Transportwagen 1 bestehende Anlage weist nicht näher dargestellte Steuerungsmittel auf, die das Förderband 5 bei einer bestimmten Anzahl von Transportwagen 1, die mit dem Förderband 5 in Kontakt stehen, abschaltet. Die Steuerungsmittel sind auch in der Lage, das Förderband 5 so zu beeinflussen, daß nur eine bestimmte Anzahl von Transportwagen 1 taktweise zur Entnahmestelle befördert werden. Die Steuerungsmittel sowie deren Art, Anordnung und Wirkungsweise ist jedoch nicht Bestandteil der vorliegenden Erfindung. Das vorab genannte taktweise Weiterbefördern geschieht nun derart, daß bei der Entnahme des zuvorderst am Förderband 5 befindlichen Transportwagens 1 dessen Vorsprung 9 die Drehsperre 10 des hinter ihm stehenden Transportwagens 1 verläßt, vgl. Fig. 6. Da das Klappteil 20 der Drehsperre ge einen Anschlag für den Vorsprung 9 des vorausbefindlichen Transportwagens 1 bildet, legt dieser bei der Entnahme des Transportwagens 1 einen bestimmten Weg zurück. Während dieser Zeit bleibt die Drehsperre 10 des hinteren Transportwagens 1 noch in der ausgelenkten Lage. Dadurch bleibt der hintere Transportwagen 1 durch sein laufend sich leer drehendes Mitnahmeelement 22 weiter stehen, während der vordere erste Transportwagen 1 entnommen wird. Es bildet sich somit ein Abstand zwischen dem vordersten und dem ihm folgenden Transportwagen 1. Hat jedoch der Vorsprung 9 des ersten entnommenen Transportwagens 1 die Drehsperre 10 des hinter ihm stehenden Transportwagens 1 verlassen, kehrt dessen Drehsperre 10 in die Ausgangslage zurück, so daß der Vorsprung 13 der Drehsperre 10 in die Verzahnung 25 des Mitnahmeelementes 22 eingreift und die Drehung des Mitnahmeelementes 22 stoppt. Da dieses in dauerndem Kontakt mit dem laufenden Förderband 5 steht, jetzt aber wie ein starres Teil wirkt, wird nun der bisher hintere und jetzt erste Transportwagen 1 vom zweiten Transportwagen 1 der Reihe 4 wegbefördert usw. Die bereits erwähnten Steuerungsmittel sorgen dafür, daß das taktweise Weiterbefördern der Transportwagen 1 jeweils auf eine bestimmte Anzahl beschränkt bleibt. Dadurch braucht das Förderband 5 nie auf einmal die gesamte Reihe 4 Transportwagen 1 befördern, sondern nur einen Teil davon. Der Energieverbrauch zum Antrieb des Förderbandes 5 reduziert sich somit. Die Sicherheit für Personen erhöht sich, da die Schubkraft des Förderbandes 5 klein gehalten werden kann.

## Patentansprüche

1. Stapelbarer Transportwagen (1) mit einer zum Transportieren durch ein Förderband (5) bestimmten Einrichtung (6), wobei die Einrichtung (6) folgende Merkmale aufweist:
a) ein Auslöseelement (7);
b) ein auf einer horizontalen Achse (23) gelagertes, mit dem Förderband in Kontakt bringbares Mitnahmeelement (22);
c) eine auf das Mitnahmeelement (22) einwirkende Drehsperre (10);
d) die Drehsperre (10) ist um eine in Schieberichtung sich erstreckende horizontale Achse (11) verschwenkbar gelagert;
e) die Drehsperre (10) weist eine Auflaufschräge (16) auf;
f) vor der Auflaufschräge (16) ist ein um eine horizontale Achse (18) verschwenkbares Klappteil (20) vorgesehen;
g) das Auslöseelement (7) ist zur Veränderung der Lage der Drehsperre (10) und des Klappteiles (20) eines weiteren zu stapelnden Transportwagens (1) bestimmt.

2. Stapelbarer Transportwagen nach Anspruch 1, dadurch **gekennzeichnet,** daß die Einrichtung (6) im unteren Bereich des Fahrgestelles (2) des Transportwagens (1) angeordnet ist.

3. Stapelbarer Transportwagen nach Anspruch 1 oder 2, dadurch **gekennzeichnet,** daß das Auslöseelement (7) einen dornförmigen Vorsprung (9) aufweist, der zur Kontaktaufnahme mit der Drehsperre (10) eines weiteren Transportwagens (1) bestimmt ist.

4. Transportwagen nach einem der Ansprüche 1 bis 3, dadurch **gekennzeichnet,** daß die Drehsperre (10) auf einer horizontalen Achse (11), die parallel zur Schieberichtung des Transportwagens (1) verläuft, begrenzt schwenkbar gelagert ist.

5. Transportwagen nach einem der Ansprüche 1 bis 4, dadurch **gekennzeichnet,** daß die Drehsperre (10) einen Durchgang (15) zur Aufnahme des Auslöseelementes (7) eines weiteren Transportwagens (1) aufweist.

6. Transportwagen nach einem der Ansprüche 1 bis 5, dadurch **gekennzeichnet,** daß die Drehsperre (10) ein Klappteil (20) trägt, das um eine horizontale, quer zur Schieberichtung des Transportwagens (1) verlaufende Achse (18) verschwenkbar gelagert ist und einen Anschlag für das Auslöseelement (7') eines weiteren Transportwagens (1) bildet.

7. Transportwagen nach einem der Ansprüche 1 bis 6, dadurch **gekennzeichnet,** daß die Drehsperre (10) eine Auflaufschräge (16) für das Auslöseelement (7') eines weiteren Transportwagens (1) aufweist.

8. Transportwagen nach einem der Ansprüche 1 bis 7, dadurch **gekennzeichnet,** daß das Mitnahmeelement (22) eine Verzahnung (25) aufweist, die zur Aufnahme eines an der Drehsperre (10) befindlichen Vorsprunges (13) bestimmt ist.

9. Transportwagen nach einem der Ansprüche 1 bis 8, dadurch **gekennzeichnet,** daß das Mitnahmeteil (22) durch die Drehsperre (10) dann gesperrt ist, wenn sich der Transportwagen (1) außerhalb des Förderbandes (5) befindet.

10. Transportwagen nach einem der Ansprüche 1 bis 10, dadurch **gekennzeichnet,** daß das Klappteil (20) und die Auflaufschräge (16) in einem Abstand zueinander angeordnet sind.
